# EUROPÄISCHE PATENTANMELDUNG

(11) **EP 2 586 579 A1**
(43) Veröffentlichungstag der Anmeldung: **01.05.2013**
(21) Anmeldenummer: 12007349.9
(22) Anmeldetag: 25.10.2012
(51) Int. Cl.: B26D 7/00, B26D 7/08

(54) **Selbstreinigende Vorrichtung zur Verarbeitung von Lebensmittelprodukten**

(30) Priorität: 28.10.2011 DE 102011117315
(71) Anmelder: Weber Maschinenbau GmbH Breidenbach, 35236 Breidenbach (DE)
(72) Erfinder: Ingo, Rother, 35236 Breidenbach (DE)
(74) Vertreter: Grünecker, Kinkeldey, Stockmair & Schwanhäusser

(57) **Zusammenfassung**

Die Erfindung betrifft eine Vorrichtung zum Aufschneiden von Lebensmittelprodukten die eine inhomogene Struktur aufweisen können. Die Vorrichtung umfasst eine Zufuhrvorrichtung, eine Schneidevorrichtung, nämlich den Slicer, und eine Abtransportvorrichtung, vorzugsweise ein Endlosförderband. Es ist vorgesehen, dass die Vorrichtung selbstreinigend ausgeführt wird. Ebenso ist eine Sterilisation der Vorrichtung vorgesehen

## Beschreibung

Die Erfindung betrifft eine Vorrichtung zum Aufschneiden von Lebensmittelprodukten wie festen Wurstwaren oder Schinken, die die Merkmale der Oberbegriffe der Patentansprüche 1, 6, und 9 aufweisen, sowie ein als Endlosband ausgebildetes Transportband gemäß dem Oberbegriff von Patentanspruch 10. Ferner betrifft die Erfindung ein Verfahren zum Aufschneiden von Lebensmitteln gemäß dem Oberbegriff der Patentansprüche 14 und 15 sowie ein Verfahren zur Reinigung eines Endlosförderbandes gemäß dem Oberbegriff von Patentanspruch 16.

Vorrichtungen zum Aufschneiden von Lebensmittelprodukten wie festen Wurstwaren oder Schinken sind bekannt. So ist in der WO 03/028964 A1 eine Vorrichtung zum Aufschneiden beschrieben, in welcher die Lebensmittelprodukte über eine Zufuhrvorrichtung einem Schneidebereich zugeführt werden. In diesem Schneidebereich werden die Lebensmittelprodukte mit einem Schneidemesser in Scheiben aufgeschnitten. Die aufgeschnittenen Lebensmittelprodukte werden in Form von Produktscheiben mit einer Abtransportvorrichtung mit einem oder mehreren als Endlosband ausgebildeten Transportbändern vom Schneidebereich weg transportiert. Hierbei ist vorgesehen, den Spalt zwischen dem Schneidebereich und der Abtransportvorrichtung sowie die Beleuchtungseinrichtung, die den Bereich des Spaltes ausleuchten soll, zu reinigen.

Im Betrieb der Vorrichtung zum Aufschneiden von Lebensmitteln hat sich herausgestellt, dass die in der WO 03/028964 A1 beschriebene Reinigung des Spaltes und der Beleuchtungseinrichtung nicht ausreichend ist.

Der Erfindung liegt demnach die Aufgabe zugrunde, die Vorrichtungen zum Aufschneiden von Lebensmittelprodukten insgesamt und die hierzu dienenden Verfahren so auszubilden, dass die Anforderungen in betrieblicher und hygienischer Hinsicht einwandfrei erfüllt werden.

Zur Lösung dieser Aufgabe werden die in den Patentansprüchen 1, 6, 9 und 10 benannten gegenständlichen Merkmale sowie die in den Patentansprüche 14, 15 und 16 benannten Verfahrensschritte vorgeschlagen.

Bei der erfindungsgemäßen Vorrichtung handelt es sich um eine Vorrichtung zum Aufschneiden von Lebensmitteln, die aus einer Zufuhrvorrichtung, einer Schneidevorrichtung, nämlich dem Slicer, sowie einer Abtransportvorrichtung besteht.

Während des Betriebs der erfindungsgemäßen Vorrichtung kommt es fortlaufend zu Verunreinigungen. Diese können verursacht sein durch die Struktur und Konsistenz der Lebensmittel, durch die mechanische Einwirkung auf die Lebensmittel während der Zufuhr sowie dem Schneidevorgang selbst und dem Abtransport.

Es besteht mithin der Bedarf der Reinigung und Sterilisation in jeder Betriebsphase der Vorrichtung zum Aufschneiden von Lebensmittelprodukten.

Zur Beseitigung der Verschmutzung der Zufuhrvorrichtung des Slicers, der Abtransportvorrichtung und der Schneidevorrichtung wird demgemäß vorgeschlagen, Einrichtungen vorzusehen, mit denen die Zufuhrvorrichtung, der Slicer und die Abtransportvorrichtung selbstreinigend ausgebildet sind.

Vorteilhafterweise werden die Einrichtungen zur Selbstreinigung in den Produktionspausen betrieben.

Als günstig hat sich jedoch auch herausgestellt, die Einrichtungen zur Selbstreinigung während der Produktion zu betreiben.

Als Mittel zum Betreiben der Einrichtung zur Selbstreinigung hat sich die Verwendung einer Reinigungsflüssigkeit bewährt. Die Reinigungsflüssigkeit wird vorzugsweise mit Sprühköpfen, so genannten Sprayballs auf die zu reinigenden Stellen aufgebracht, wobei die Sprayballs an den Enden von Leitungen für die Reinigungsflüssigkeit vorgesehen sind. Die Sprayballs weisen eine Vielzahl von als Düsen ausgebildete Öffnungen auf, so dass damit auf die Aufbringung der Reinigungsflüssigkeit eingewirkt werden kann.

Insbesondere sind die Einrichtungen zum Selbstreinigen des Slicers und vorzugsweise der Zufuhrvorrichtung und der Abtransportvorrichtung mit einer Reinigungsflüssigkeit betreibbar, wobei die Reinigungsflüssigkeit mit Sprayballs auf die zu reinigenden Stellen aufsprühbar ist.

In einer Ausführungsform sind am Ende von Leitungen für die Reinigungsflüssigkeit Sprayballs vorgesehen, die eine Vielzahl von als Düsen ausgebildeten Öffnungen aufweisen, aus denen die Reinigungsflüssigkeit austreten kann.

Zum Abtransport der Reinigungsflüssigkeit können in vorteilhafter Weise am Slicer und/oder der Zufuhrvorrichtung und/oder Abtransportvorrichtung Abflussvorrichtungen vorgesehen sein. Wird auf diese Abflussvorrichtung verzichtet, wird in vorteilhafter Weise vorgeschlagen, die abzuführende Reinigungsflüssigkeit über Abflusseinrichtungen am Fußboden abzuführen.

In Ausgestaltung der Erfindung hat es sich als besonders günstig herausgestellt, an der Vorrichtung zum Aufschneiden von Lebensmitteln, also den Slicer, der Zuführvorrichtung und der Abtransportvorrichtung Einrichtungen zum Trocknen und/oder Abspülen von vorzugsweise der Reinigungsflüssigkeit vorzusehen. Ferner können Einrichtungen zum Desinfizieren vorgesehen sein.

In einer besonderen Ausführungsform der Erfindung ist vorgesehen, dass im Slicer und vorzugsweise sowohl in der Zufuhrvorrichtung als auch in der Abtransportvorrichtung Einrichtungen vorhanden sind, vermittels derer der Slicer sowie die Zufuhr- als auch die Abtransportvorrichtung sterilisiert werden können. Dieses kann sowohl in den Produktionspausen als auch während der Produktion erfolgen.

Die Sterilisation kann mit Dampf oder Peroxid, vorzugsweise Wasserstoffperoxid erfolgen. Ebenso können zu diesem Zweck Ozonlampen eingesetzt werden.

In einer weiteren bevorzugten Ausgestaltung der Erfindung ist vorgesehen, in der Produktionszone des Slicers eine Absauganlage zum Absaugen von Schneidemehl vorzusehen. Das Schneidemehl fällt regelmäßig während der Produktion an. Durch das Absaugen vermittels der Absauganlage wird eine Verunreinigung im unmittelbaren Produktionsbereich sowie den zugeordneten und nachgeordneten Anlagenteilen verhindert. Bevorzugt wird das Schneidemehl während der Produktion abgesaugt.

Zum Abtransport der im Slicer aufgeschnittenen Lebensmittel ist ein Transportband oder mehrere Transportbänder vorgesehen. Da auch die Transportbänder gereinigt werden müssen, ist erfindungsgemäß eine Einrichtung zur permanenten Reinigung des Transportbandes oder der Transportbänder vorgesehen

Die permanente Reinigung kann vorzugsweise dadurch erfolgen, dass der untere Bereich des Transportbandes durch eine Reinigungsflüssigkeit geführt wird. Um eine Verunreinigung der Lebensmittelprodukte durch die Reinigungsflüssigkeit zu vermeiden, ist vorzugsweise vorgesehen, das Transportband nach dem Austritt aus der Reinigungsflüssigkeit mit Vorrichtungen zum Abstreifen der Reinigungsflüssigkeit auszuführen, wobei in vorteilhafter Weise auch eine Vorrichtung zum Abbürsten des Transportbandes vorgesehen sein kann.

Gegenstand der Erfindung ist auch ein Verfahren zu Aufschneiden von Lebensmitteln mit inhomogener Struktur, bei dem die Lebensmittel einem Slicer zugeführt werden und mit einer Abtransportvorrichtung vom Slicer weg transportiert werde, wobei eine oder mehrere der am Verfahren beteiligten Vorrichtungen vorzugsweise durch Absaugen gereinigt werden

Ferner ist die Erfindung auf ein Verfahren zum Aufschneiden von Lebensmittelprodukten gerichtet, bei dem die an der Durchführung des Verfahrens beteiligten Vorrichtungen vorzugsweise durch Dampf, Peroxid, insbesondere Wasserstoffperoxid oder Ozonlampen sterilisiert werden.

Auch ist die Erfindung auf ein Verfahren zur Reinigung eines Endlosförderbandes gerichtet, welches zum Abtransport von im Slicer aufgeschnittenen Lebensmitteln dient, bei dem der untere Bereich des Endlosförderbandes durch eine Reinigungsflüssigkeit geführt wird und wobei anschließend die Reinigungsflüssigkeit vom Endlosförderband abgestreift wird und wobei gegebenenfalls das Endlosförderband anschließend abgebürstet wird.

Eine Ausführungsform der Erfindung wird unter Bezugnahme auf die Zeichnung nachfolgend beschrieben.

Es zeigt:
- Figur 1:: eine Vorrichtung zum Aufschneiden von Lebensmittelprodukten gemäß einer ersten Ausführungsform der Erfindung,
- Figur 2:: eine Vorrichtung zum Aufschneiden von Lebensmittelprodukten gemäß einer zweiten Ausführungsform der Erfindung,
- Figur 3:: einen Sprayball für die erfindungsgemäße Vorrichtung,
- Figur 4:: eine Vorrichtung zum Aufschneiden von Lebensmittelprodukten gemäß einer dritten Ausführungsform der Erfindung, und
- Figur 5:: eine Vorrichtung zum Aufschneiden von Lebensmittelprodukten gemäß einer vierten Ausführungsform der Erfindung.

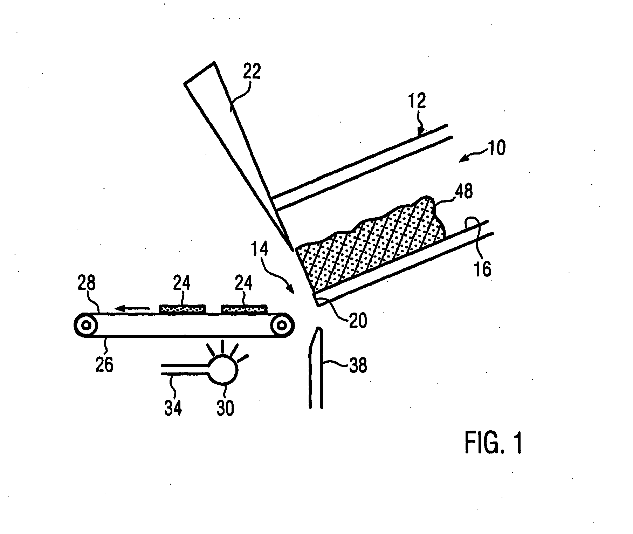

In Figur 1 ist eine Vorrichtung zum Aufschneiden von Lebensmittelprodukten 10, die eine inhomogene Struktur aufweisen können, dargestellt. Bei diesen Lebensmittelprodukten 10 handelt es sich vornehmlich um rohen oder gekochten Schinken, der neben den Fleischanteilen auch Einlagerungen von Fett aufweist. Ebenso sind als Lebensmittelprodukte 10, die aufgeschnitten werden sollen, unter anderem auch Wurstwaren und Käse zu sehen, die ebenfalls eine inhomogene Struktur aufweisen können.

Die aufzuschneidenden Lebensmittelprodukte 10 werden mit einer Zufuhreinrichtung 12 dem Schneidebereich 14 zugeführt. Die Zufuhreinrichtung 12 weist eine Auflagefläche 16 auf, in die in der Regel eine Vorschubeinrichtung 18 integriert ist. Die Auflagefläche 16 weist in ihrem vorderen Bereich eine Schneidekante 20 auf. Durch Rotation des Schneidemessers 22 werden Produktscheiben 24 abgeschnitten.

Die Schneidbewegung des Schneidemessers 22 wird vorzugsweise dadurch erzeugt, dass das Schneidemesser 22 exzentrisch gelagert ist und demgemäß um eine Achse rotiert, die nicht dem Mittelpunkt des Schneidemessers entspricht.

Die Produktscheiben 24 werden einer Abtransportvorrichtung 26 zugeführt oder fallen auf Grund der Schrägstellung der Zufuhrvorrichtung 12 auf die Abtransportvorrichtung 26.

Die Abtransportvorrichtung 26 kann durch ein Endlosförderband 28 gebildet sein. Bevorzugt werden jedoch mehrere Endlosförderbänder 28 eingesetzt.

Das Endlosförderband 28 oder die Endlosförderbänder 28 sind in ihrer Fördergeschwindigkeit so einstellbar, dass die Produktscheiben 24 vereinzelt abgefördert werden. Auch ist vorgesehen, das oder die Endlosförderbänder 28 so zu takten, dass die Produktscheiben 24 gerade oder schräg gestapelt werden können, so dass die Produktscheiben 24 entsprechend stapelweise abgefördert werden können.

Die gesamte Vorrichtung zum Aufschneiden von Lebensmitteln 10 ist selbstreinigend ausgeführt.

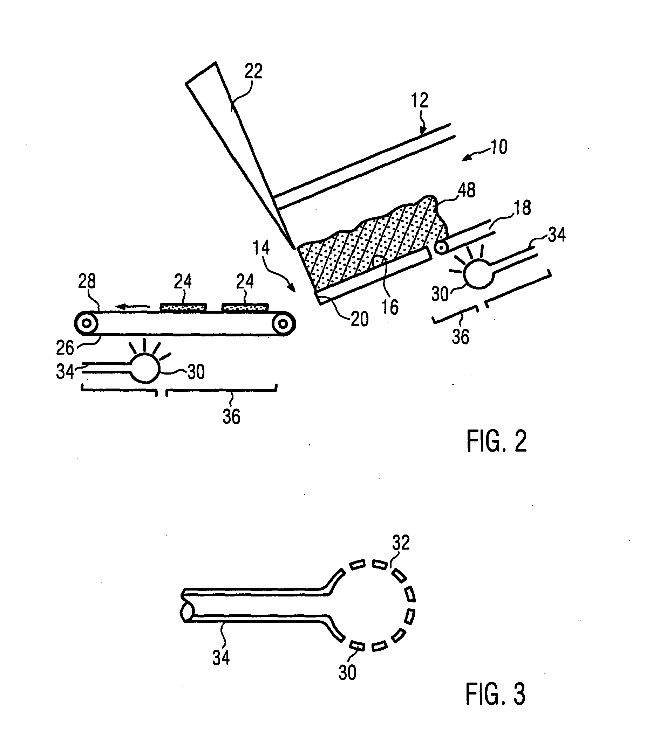

Wie in Figur 2 dargestellt, kann in vorteilhafter Weise in der Zufuhreinrichtung 12 eine Vorschubeinrichtung 18 vorgesehen sein, die ähnlich einem Endlosförderband ausgebildet ist. Die Vorschubeinrichtung 18 kann vorzugsweise mit Wischlippen, Bürsten oder Abstreifern fortlaufend gereinigt werden. Auch können Verunreinigungen mit einem Druckluftstrahl oder einem Wasserstrahl gereinigt werden. Hierbei hat es sich als besonders vorteilhaft herausgestellt, die Druckluft und/oder den Wasserstrahl gepulst auf die zu reinigende Flächen aufzubringen.

Die in die Zufuhreinrichtung 12 integrierte Vorschubeinrichtung 18 kann auch mit Schabern und/oder Abstreifern versehen sein, so dass die Zufuhreinrichtung 12 insgesamt fortlaufend gereinigt werden kann.

Wie in den Figuren 1 und 2 dargestellt, können sowohl die Zufuhreinrichtung 12 als auch der Schneidebereich 14 in vorteilhafter Weise auch mit einer Reinigungsflüssigkeit gereinigt werde. Zur Aufbringung der Reinigungsflüssigkeit können in vorteilhafter Weise Sprühköpfe, so genannte Sprayballs 30, eingesetzt werden.

Bei den in Figur 3 dargestellten Sprayballs 30 handelt es sich um vorzugsweise kugelförmige Gebilde, die entlang ihrer Oberfläche Öffnungen 32 aufweisen. Diese Öffnungen 32 können als Düsen ausgebildet sein. Die Reinigungsflüssigkeit wird vermittels von Leitungen 34 zu den Sprayballs 30 gefördert.

Aus den Sprayballs 30 tritt die Reinigungsflüssigkeit mit Überdruck aus, so dass die Reinigungsflüssigkeit mit Impuls auf die zu reinigenden Flächen auftrifft. Durch den Impuls und die Zusammensetzung der Reinigungsflüssigkeit wird eine Reinigungswirkung erzielt.

Die Leitungen 34 und die Sprayballs 30 können so beschaffen sein, dass die Reinigungsflüssigkeit aus unterschiedlichen Winkeln auf die zu reinigenden Flächen auftrifft.

Als Reinigungsflüssigkeit kommt zunächst Wasser in Frage. Dem Wasser können spezifische Reinigungsmittel zugesetzt sein. Hierbei haben sich in besonderer Weise fettlösende Reinigungsmittel bewährt.

Auch kann der Reinigungsflüssigkeit ein oxidierendes Mittel zugesetzt werden, wobei sich hier mit Wasser verdünntes Wasserstoffperoxid bewährt hat.

Flüssigkeiten zur Reinigung sind in vorteilhafter Weise sowohl in der Zufuhreinrichtung 12, dem Schneidebereich 14 als auch in der Abtransportvorrichtung 26 einsetzbar. Die verbrauchte Reinigungsflüssigkeit muss allerdings auch aus der Vorrichtung zum Aufschneiden von Lebensmitteln 10 abgeführt werden.

Die in Figur 2 dargestellten Auffangvorrichtungen 36 haben sich bewährt. Die verbrauchte Reinigungsflüssigkeit fällt unter atmosphärischem Druck in die unter den jeweiligen Vorrichtungen zum Aufschneiden von Lebensmitteln 10 vorgesehenen Auffangvorrichtungen 36. Sollte in betrieblicher oder konstruktiver Hinsicht das Vorsehen von Auffangvorrichtungen 36 direkt an den Vorrichtungen zum Aufschneiden von Lebensmitteln 10 ungünstig sein, so können auch Abflusseinrichtungen am Fußboden vorgesehen sein.

An den Vorrichtungen zum Aufschneiden von Lebensmitteln 10 sind ferner Vorrichtungen zum Abspülen von Reinigungsflüssigkeit sowie Vorrichtungen zum Trocknen der abgespülten Teile vorgesehen. Zum Trocknen kommen im Wesentlichen Druckluft, erwärmte Luft sowie Heizstrahler in Frage.

Auch ist vorgesehen, die Vorrichtungen zum Aufschneiden von Lebensmitteln 10 zu desinfizieren. Hierzu kommen vornehmlich Zusätze zu der Reinigungsflüssigkeit wie auch Ultraviolettstrahler in Betracht.

Zur Reinigung insbesondere des Schneidebereichs 14 hat es sich, wie in Figur 1 dargestellt, als vorteilhaft erwiesen, Vorrichtungen zum Absaugen 38 vorzusehen.

Die Vorrichtungen zum Absaugen 38 weisen einen Absaugrüssel und Verbindungsleitungen zu einem Unterdruckerzeuger auf. In besonderer Weise hat sich der Einsatz der Vorrichtung zum Absaugen 38 im Schneidebereich 14 bewährt. Dort fallen betriebsbedingt immer Reste der aufgeschnittenen Lebensmittel in Form von Schneidemehl an. Dieses an sich eher trockene Schneidemehl kann bei einem höheren Fettanteil der aufzuschneidenden Lebensmittel oder durch herabtropfendes Fett zu etwas kompakteren Konglomeraten geformt sein.

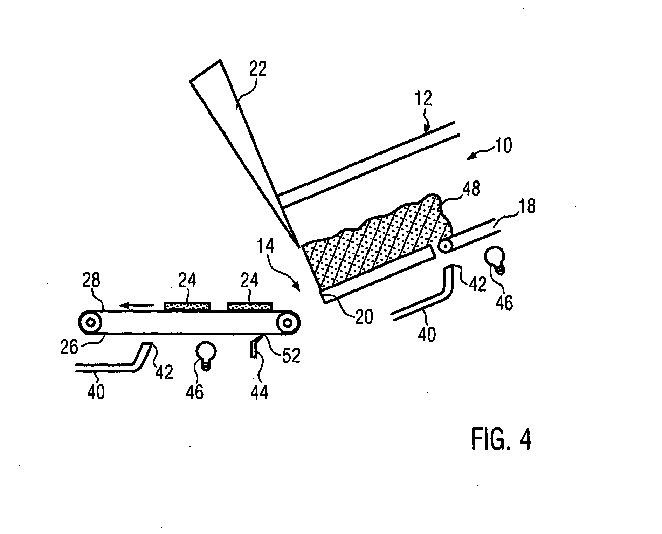

In vorteilhafter Weise können auch die Zufuhreinrichtung 12 und die Abtransportvorrichtung 26 mit der Vorrichtung zum Absaugen 38 gereinigt werden. Das betrifft bei der Zufuhreinrichtung 12 vor allem Teile der Lebensmittel, die sich im Verlauf ihres Transports gelöst haben oder in der Zufuhreinrichtung 12 abgetrennt worden sind und Teile der Lebensmittel, die im Schneidebereich 14 aus dem Produktionsweg herausgefallen sind. Wie in Figur 4 dargestellt, sind an der Zufuhreinrichtung 12, dem Schneidebereich 14 und an der Abtransportvorrichtung 26 Vorrichtungen zum Sterilisieren 40 vorgesehen. So können an der Zufuhreinrichtung 12, im Schneidebereich 14 und an der Abtransportvorrichtung 26 Düsen 42 zum Beaufschlagen mit Wasserdampf vorgesehen sein. Vorzugsweise kommt hierbei ein Niederdruckdampf von etwa 2 bar zur Anwendung. Das sich an den mit Dampf beaufschlagten Teilen bildende Kondensat wird vorzugsweise mit Abstreifern 44 entfernt.

Ebenso ist eine Sterilisation mit Peroxiden vorgesehen, wobei es sich hierbei vorzugsweise wegen seiner stark oxidierenden Wirkung um Wasserstoffperoxid handelt. Auf Grund seiner Instabilität wird das Wasserstoffperoxid mit Wasser verdünnt, so dass es vorzugsweise in einer Konzentration von 30% zur Anwendung kommt. Nach Aufbringen des Peroxides und einer vorgegebenen Einwirkungsdauer wird überflüssiges Peroxid - Wasser - Gemisch entfernt.

Als besonders geeignetes Mittel zur Sterilisation der Zufuhreinrichtung 12, dem Schneidebereich 14 und der Abtransportvorrichtung 26 hat sich der Einsatz von Ozonlampen 46 erwiesen.

Mit den Ozonlampen 46 werden unter anderem der Teil der Endlosförderbänder 26 bestrahlt, die nicht mit Lebensmittelprodukten 10 oder Produktscheiben 24 beladen sind. Demgemäß können Ozonlampen auch während der Produktion eingesetzt werden.

Die Vorrichtung zum Aufschneiden von Lebensmitteln 10 umfasst auch eine Abtransportvorrichtung 26, die durch ein oder mehrere Endlosbänder gebildet ist.

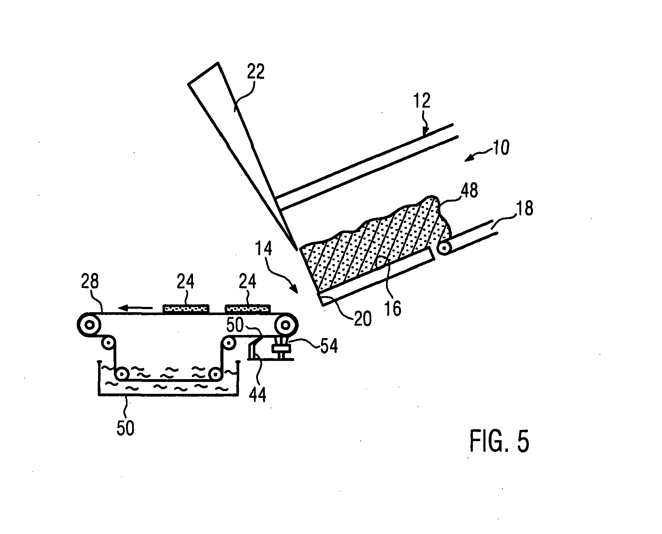

Wie in Figur 5 dargestellt, werden im oberen Bereich der Endlosbänder die Produktscheiben abtransportiert. Der untere Bereich der Endlosbänder wird einer permanenten und/oder bedarfsweisen Reinigung unterzogen. Hierzu kann in vorteilhafter Weise der untere Teil der Endlosbänder durch ein Reinigungsbad 50 geführt werden. Bei Bedarf ist es auch möglich, den unteren Teil der Endlosbänder vorzugsweise mit Sprayballs mit Reinigungsflüssigkeit zu besprühen. In jedem Fall ist es günstig, die überschüssige und die gebrauchte Reinigungsflüssigkeit abzustreifen. Das Abstreifen kann vorzugsweise mit elastischen Abstreiflippen 52 oder mit Bürsten 54 erfolgen.

## Patentansprüche

1. Vorrichtung zum Aufschneiden von Lebensmittelprodukten wie festen Wurstwaren oder Schinken, wobei die Lebensmittelprodukte eine inhomogene Struktur aufweisen können und wobei die Lebensmittelprodukte mit einer Zufuhrvorrichtung einer Schneidevorrichtung, nämlich einem Slicer, zuführbar sind und die im Slicer in Scheiben geschnittenen Lebensmittel mit einer Abtransportvorrichtung abtransportiert werden, wobei die Abtransportvorrichtung vorzugsweise durch ein oder mehrere Endlosbänder gebildet ist,
**dadurch gekennzeichnet,**
**dass** in dem Slicer und vorzugsweise sowohl in der Zufuhrvorrichtung als auch in der Abtransportvorrichtung Einrichtungen vorgesehen sind mit denen der Slicer und vorzugsweise die Zufuhrvorrichtung und/oder die Abtransportvorrichtung und/oder die Schneidevorrichtung selbstreinigend ausführbar sind.

2. Vorrichtung zum Aufschneiden von Lebensmittelprodukten nach Patentanspruch 1, **dadurch gekennzeichnet, dass** die Einrichtungen zum Selbstreinigen des Slicers und vorzugsweise der Zufuhrvorrichtung und der Abtransportvorrichtung in den Produktionspausen betreibbar sind.

3. Vorrichtung zum Aufschneiden von Lebensmittelprodukten nach Patentanspruch 1, **dadurch gekennzeichnet, dass** die Einrichtungen zum Selbstreinigen des Slicers und vorzugsweise der Zufuhrvorrichtung und der Abtransportvorrichtung während der Produktion betreibbar sind.

4. Vorrichtung zum Aufschneiden von Lebensmittelprodukten nach einem der vorstehenden Patentansprüche, **dadurch gekennzeichnet, dass** die Einrichtungen zum Selbstreinigen des Slicers und vorzugsweise der Zufuhrvorrichtung und der Abtransportvorrichtung mit einer Reinigungsflüssigkeit betreibbar sind.

5. Vorrichtung zum Aufschneiden von Lebensmittelprodukten nach einem der vorstehenden Patentansprüche, **dadurch gekennzeichnet, dass** am Slicer und den vorzugsweise vorgesehenen Zuführvorrichtungen und den Abtransportvorrichtungen Einrichtungen zum Trocknen und/oder Einrichtungen zum Abspülen und/oder Einrichtungen zum Desinfizieren vorgesehen sind.

6. Vorrichtung zum Aufschneiden von Lebensmittelprodukten wie festen Wurstwaren oder Schinken, wobei die Lebensmittelprodukte eine inhomogene Struktur aufweisen können und wobei die Lebensmittelprodukte mit einer Zufuhrvorrichtung einer Schneidevorrichtung, nämlich einem Slicer, zuführbar sind und die im Slicer in Scheiben geschnittenen Lebensmittel mit einer Abtransportvorrichtung abtransportiert werden, wobei die Abtransportvorrichtung vorzugsweise durch ein Endlosband gebildet ist, **dadurch gekennzeichnet,**
**dass** in dem Slicer und vorzugsweise sowohl in der Zufuhrvorrichtung als auch in der Abtransportvorrichtung Einrichtungen vorgesehen sind mit denen der Slicer und vorzugsweise die Zufuhrvorrichtung und die Abtransportvorrichtung sterilisiert werden können.

7. Vorrichtung zum Aufschneiden von Lebensmittelprodukten nach Patentanspruch 6, **dadurch gekennzeichnet, dass** die Einrichtungen zum Sterilisieren des Slicers und vorzugsweise der Zufuhrvorrichtung und der Abtransportvorrichtung in den Produktionspausen betreibbar sind.

8. Vorrichtung zum Aufschneiden von Lebensmittelprodukten nach Patentanspruch 6, **dadurch gekennzeichnet, dass** die Einrichtungen zum Sterilisieren des Slicers und vorzugsweise der Zufuhrvorrichtung und der Abtransportvorrichtung während der Produktion betreibbar sind.

9. Vorrichtung zum Aufschneiden von Lebensmittelprodukten wie festen Wurstwaren und Schinken, wobei die Lebensmittelprodukte eine inhomogene Struktur aufweisen können und in einem Slicer in Scheiben geschnitten werden,
**dadurch gekennzeichnet,**
**dass** in der Produktionszone des Slicers eine Absauganlage zum Absaugen von Schneidemehl angeordnet ist.

10. Als Endlosband ausgebildetes Transportband, insbesondere zum Abtransport von in einem Slicer in Scheiben geschnittenen Lebensmittelprodukten,
**dadurch gekennzeichnet,**
**dass** im oberen Bereich des Transportbandes die Lebensmittelprodukte transportiert werden und im unteren Bereich des Transportbandes eine Einrichtung zur permanenten Reinigung des Transportbandes vorgesehen ist.

11. Als Endlosband ausgebildetes Transportband nach Patentanspruch 10, **dadurch gekennzeichnet, dass** der untere Bereich des Transportbandes mit einer Reinigungsflüssigkeit gereinigt wird, wobei vorzugsweise der untere Bereich des Transportbandes durch eine Reinigungsflüssigkeit führbar ist.

12. Als Endlosband ausgebildetes Transportband nach Patentanspruch 10 oder 11, **dadurch gekennzeichnet, dass** im unteren Bereich des Transportbandes Vorrichtungen zum Abstreifen von Reinigungsflüssigkeit vorgesehen sind.

13. Als Endlosband ausgebildetes Transportband nach einem der Patentansprüche 10 bis 12, **dadurch gekennzeichnet, dass** im unteren Bereich des Transportbandes Vorrichtungen zum Abbürsten des Transportbandes vorgesehen sind.

14. Verfahren zum Aufschneiden von Lebensmittelprodukten mit inhomogener Struktur wie feste Wurstwaren oder Schinken,
**dadurch gekennzeichnet,**
**dass** die Lebensmittelprodukte vermittels einer Zufuhrvorrichtung einem Slicer zugeführt werden, in dem Slicer in Scheiben geschnitten werden und mit einer Abtransportvorrichtung vom Slicer weg transportiert werden, wobei während der Produktion und/oder den Produktionspausen wenigstens eine der beteiligten Vorrichtungen und/oder der Slicer vorzugsweise durch Absaugen gereinigt werden.

15. Verfahren zum Aufschneiden von Lebensmittelprodukten mit inhomogener Struktur wie feste Wurstwaren oder Schinken,
**dadurch gekennzeichnet,**
**dass** die Lebensmittelprodukte vermittels einer Zufuhrvorrichtung einem Slicer zugeführt werden, in dem Slicer in Scheiben geschnitten werden und mit einer Abtransportvorrichtung vom Slicer weg transportiert werden wobei während der Produktion und/oder in den Produktionspausen wenigstens eine der beteiligten Vorrichtungen und/oder der Slicer vorzugsweise durch Dampf, Peroxid oder mit Ozonlampen sterilisiert werden.

16. Verfahren zur Reinigung eines Endlosförderbandes das einer Vorrichtung zum Aufschneiden von Lebensmitteln mit inhomogener Struktur nachgeordnet ist,
**dadurch gekennzeichnet,**
**dass** der untere Bereich des Endlosförderbandes mit einer Reinigungsflüssigkeit gereinigt wird, wobei das Endlosförderband bevorzugt eine Reinigungsflüssigkeit durchläuft, wobei übrige Reinigungsflüssigkeit abgestreift werden kann und das Endlosförderband weiterhin mit Bürsten gereinigt werden kann.
